# EUROPEAN PATENT SPECIFICATION

(11) **EP 1 634 647 B1**
(45) Date of publication and mention of the grant of the patent: **25.05.2011**
(21) Application number: 05255119.9
(22) Date of filing: 18.08.2005
(51) Int. Cl.: B01L 3/00, G01N 33/58, B01J 19/00

(54) **Plate and test method using the same**
Platte und Testmethode für deren Gebrauch
Plaque et son utilisation dans une méthode de test

(30) Priority: 13.09.2004 JP 2004264892
(43) Date of publication of application: 15.03.2006
(73) Proprietor: ALPS ELECTRIC CO., LTD., Ota-ku Tokyo 145 (JP)
(72) Inventor: Yamashita, Tatsumaro, Ota-ku Tokyo (JP); Takamura, Shozo, Ota-ku Tokyo (JP); Shibuya, Yoshihisa, Ota-ku Tokyo (JP)
(74) Representative: Kensett, John Hinton

(56) References cited:
- EP-A- 1 616 622
- WO-A-00/61198
- US-A1- 2002 061 529
- US-A1- 2003 091 475
- US-A1- 2004 043 509
- US-A1- 2005 170 400

## Description

### BACKGROUND OF THE INVENTION

### 1. Field of the Invention

The present invention relates to a simple plate capable of performing a blood test, a urine test, and a DNA test by a medical institution or an individual, and more specifically, to a plate and a test method using the same capable of performing a test on test particles filled inside a flow path with high accuracy.

### 2. Description of the Related Art

Recently, a testing chip for a collected material from the human body, such as blood or urine, has been increasingly developed. For example, a DNA chip where multiple kinds of DNA fragments (referred to as probes or reagents) are attached on a substrate made of, for example, glass can detect plural kinds of specific genes (for example, cancer gene) from genes (referred to as a test sample or target) collected from the human body at one time.

When the detection of biological molecules, which has been conventionally performed by a test tube, a dropper, an agitator or the like, is performed on the chip, a test can be performed at high speed, and a test process can be simplified, which has attracted attention.

In the meantime, a testing chip is mainly developed as a research chip for a university or a research institution at this time, but it is expected in the future that a simple testing chip for a medical institution or an individual will be commercialized.

The testing chip is composed of a plate substrate having a flow path formed in a groove shape therein and a lid body which is formed on the plate substrate to be joined to the plate substrate.

In a test method, probes having specific base sequences are disposed inside the flow path, and DNA (test sample) collected from the human body is labeled with a fluorescent dye to flow inside the flow path. Then, if the test sample includes DNA having complementary base sequences to the probe, the DNA is hybridized with the probe to be captured.

For example, the probe can be identified by a fluorescent dye having a different wavelength from the fluorescent dye added to the test sample, and base sequences of DNA included in a test sample can be specified by detecting which probe is hybridized with the DNA of the test sample.

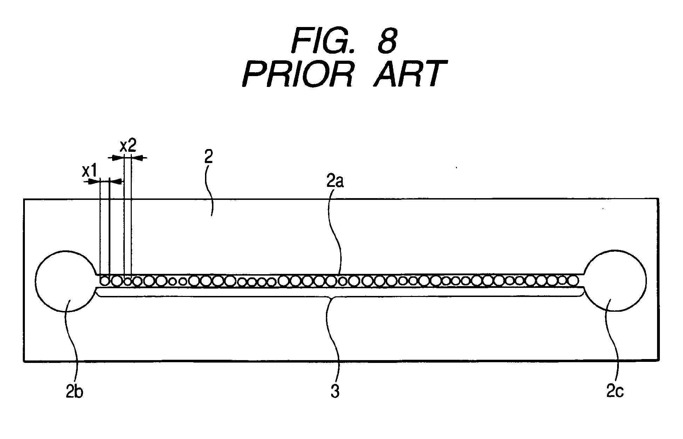

FIG. 8 is a plan view illustrating a plate substrate 2 where a plurality of test particles 3 are arranged in a row inside a flow path 2a. A probe is fixed on the test particle 3 which is made of, for example, resin or glass to have a diameter of about 100 µm.

The flow path 2a is a portion where a solution including a test sample flows. An inflow port 2b is formed in a concave shape in the upstream side of the flow path 2a, and an outflow port 2c is formed in a concave shape in the downstream side of the flow path 2a. From the inflow port 2b, a solution including a test sample, such as DNA collected from the human body, is injected to flow inside the flow path 2a. At this time, if the test sample includes DNA which is complementary to the probe fixed on the test particle 3, the probe and the DNA are hybridized with each other to be fixed. When the fluorescent intensities of the respective test particles 3 are measured, it can be determined whether the DNA is captured or not.

The method and device for detecting DNA are disclosed in Japanese Unexamined Patent Application Publication No. 2000-346842 (FIGS. 1 and 2).

Even though the diameter of the test particle 3 is about 100 µm, each test particle 3 actually has a tolerance. As shown in FIG. 8, a certain test particle 3 has a diameter of X1, and another test particle 3 has a diameter of X2, which means that the diameters of the test particles 3 are not uniform. For this reason, the following problems arise.

When a test sample DNA is detected by a fluorescence reaction, it is necessary to know which probe is bonded to the test sample DNA. The probe is fixed on the test particle 3, and the test particle 3 is labeled with a fluorescent dye (having a different fluorescence wavelength from a fluorescent dye for labeling sample DNA), so that it can be identified which probe is fixed on a certain test particle. Accordingly, if it is known which of the test particles 3 arranged inside the groove the detected test sample DNA is captured by, the probe to which the sample DNA has complementary sequences is known.

However, although the fluorescence intensities of the test particles 3 are measured one by one by the fluorescence detecting device, tolerances are accumulated as described above, because each test particle has a tolerance. At the present moment, even though the device recognizes that the X-th test particle 3 is tested, it is likely that the test particle 3 which has already been tested is tested, or the test particle 3 which is not tested is skipped so that another test particle 3 adjacent thereto is tested.

In addition, it is preferable that the positions and insertion orders of the test particles 3 inside the flow path 2a be not changed at the time of testing. For example, if the plate substrate 2 is waved up and down to simulate the reaction to a sample DNA, the test particles 3 move to simply change their positions, because there is no place for regulating the movement of the test particles 3 inside the long flow path 2a. Particularly, if the test particles 3 having a small diameter exist, the test particles 3 move over the small tests particles 3 when moving inside the flow path 2a. Therefore, there is a problem in that the insertion order of the test particles is upset.

As a result, the conventional plate has a problem in that the respective test particles 3 cannot be tested with high accuracy.

Further prior art arrangements are known from EP 1 616 622, US 2002/061529, US 2005/170400, WO 00/61198 and US 2003/091475.

### SUMMARY OF THE INVENTION

The present invention has been finalized in view of the drawbacks inherent in the conventional plate, and it is an object of the present invention to provide a plate and a test method using the same capable of performing a test on test particles filled inside a flow path with high accuracy.

According to an aspect of the present invention there is provided a test method using a plate as recited by Claim 1.

As described above, in the above-mentioned structure, the flow path is divided into a plurality of regions by the regulation sections, and the test particles are filled inside the respective regions. According to this structure, the test particles can be properly positioned in the respective regions.

Further, since a test target region can be previously divided into a plurality of regions, the accumulated tolerances of the test particles in the respective regions are small, even though the test particles filled in the respective regions have tolerances. Therefore, the test particles can be tested with high accuracy inside the respective regions.

Moreover, since both side surfaces are bent, regions whose flow directions are different from each other are formed in the upstream side and the downstream side of the bent place, respectively.

With the flow path formed in a zigzag shape from the upstream side to the downstream side, the flow path can be divided simply and properly into a plurality of regions for regulating the number of test particles.

The accumulated tolerances of the test particles in the respective regions are small, so that the test particles can be tested with high accuracy in the respective regions.

Whenever the test region is changed, the beginning reference position is also changed. Further, the test particles filled inside the respective regions are tested from a new test beginning reference position, so that the accumulated tolerances of the test particles can be reset in each of the regions, which makes it possible to test the test particles with high accuracy.

### BRIEF DESCRIPTION OF THE DRAWINGS

FIG. 1 is a perspective view illustrating the appearance of a testing plate according to the invention;
FIG. 2 is a partial plan view illustrating the shape of a flow path of the testing plate shown in FIG. 1;
FIG. 3 is a perspective view illustrating the appearance of an example testing plate, which does not form an embodiment of the invention and has a different shape from the testing plate of FIG. 1;
FIG. 4 is a partial plan view illustrating the shape of a flow path of the testing plate shown in FIG. 3;
FIG. 5 is a partial plan view illustrating the shape of a flow path of an example testing plate, which does not form an embodiment of the invention and has a different shape from the testing plate of FIG. 1;
FIG. 6 is a partial plan view illustrating the shape of a flow path of an example testing plate, which does not form an embodiment of the invention and has a different shape from the testing plate of FIG. 1;
FIG. 7 is a schematic diagram showing an embodiment of a fluorescence detecting device of the present invention; and
FIG. 8 is a partial plan view of a testing plate according to the related art.

### DESCRIPTION OF THE PREFERRED EMBODIMENT

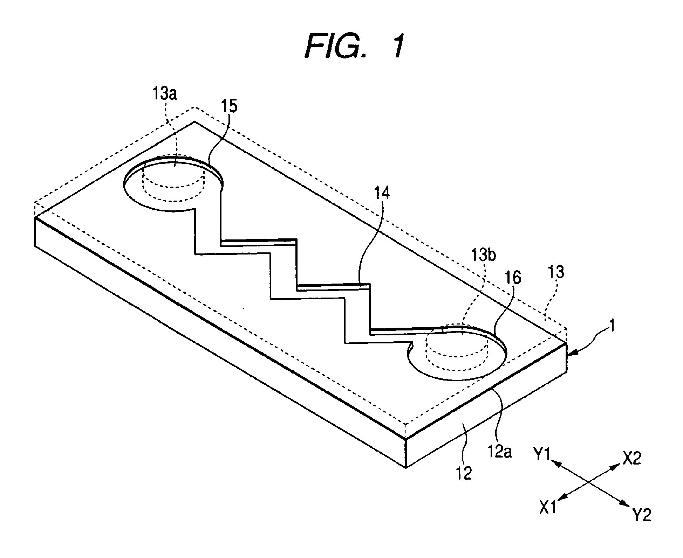

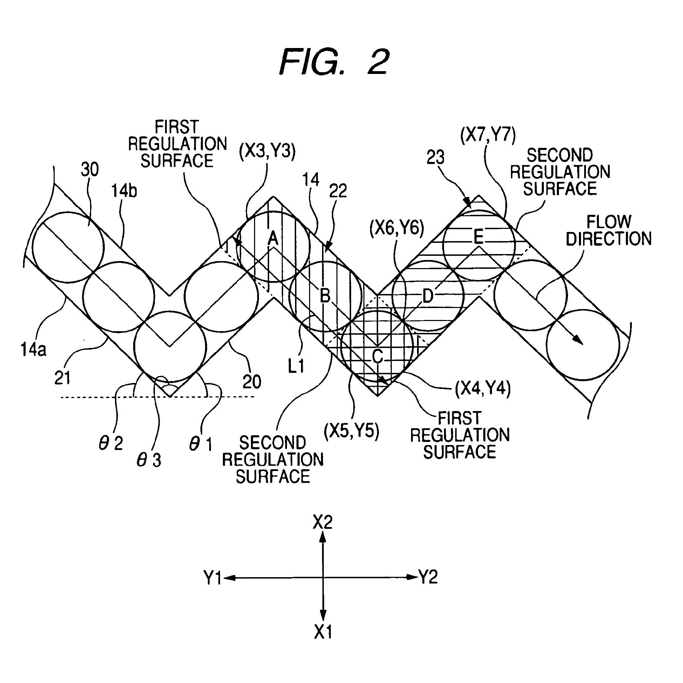

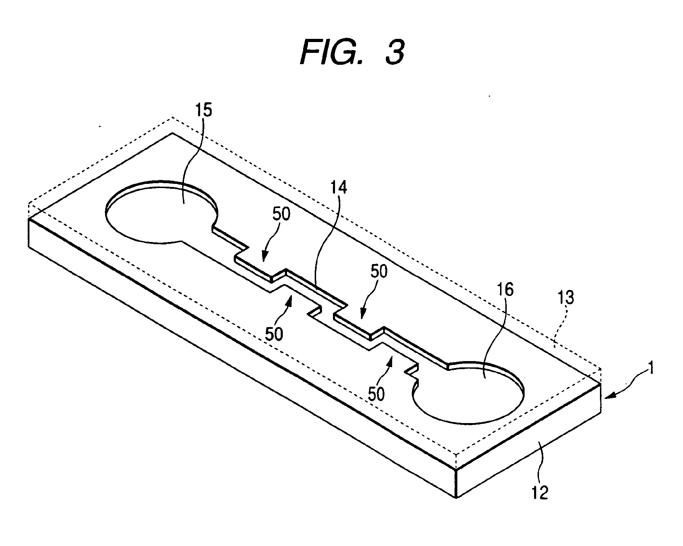

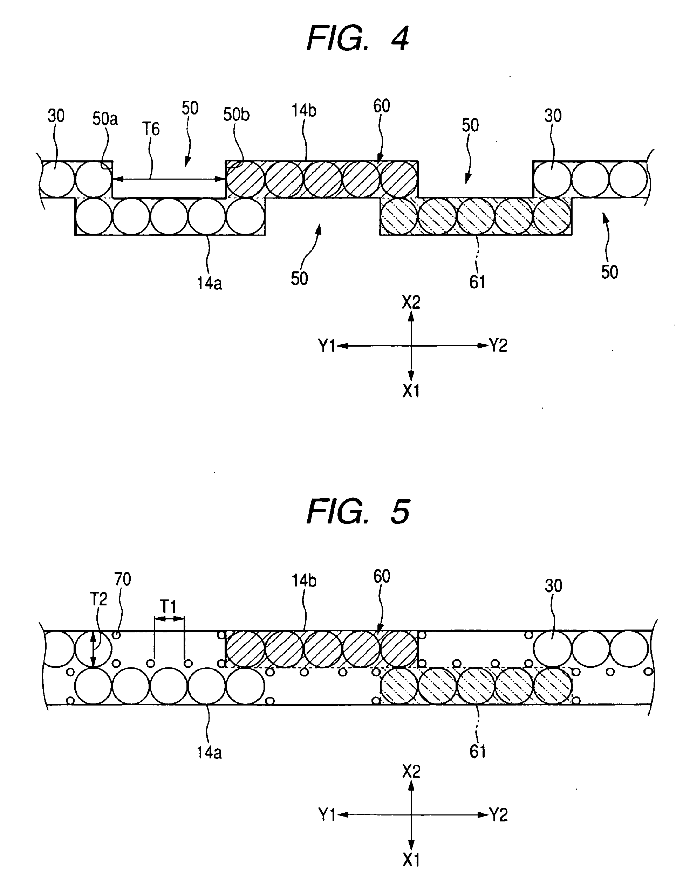

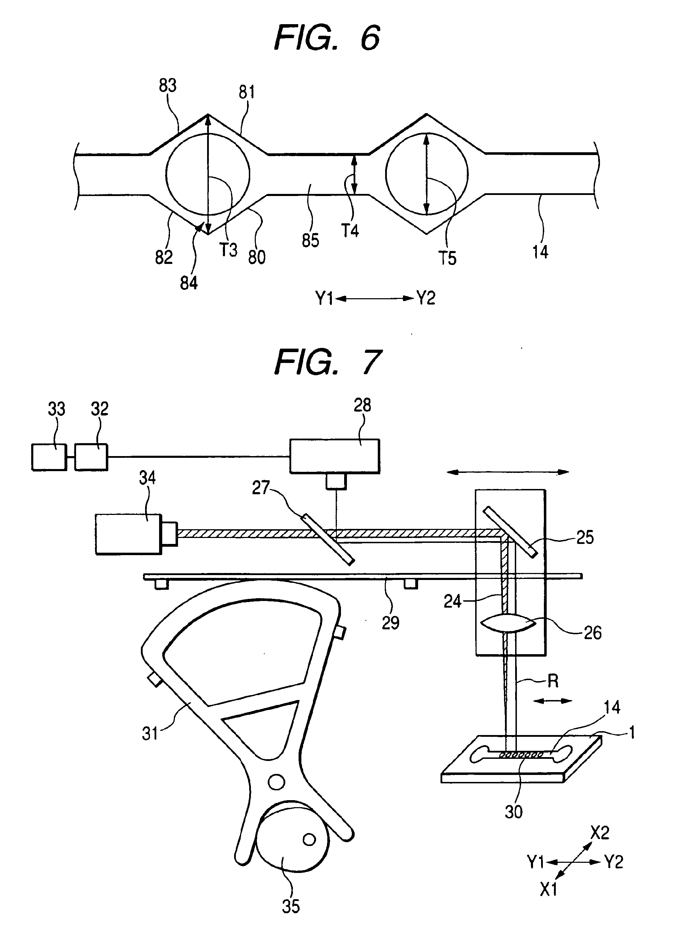

FIG. 1 is a perspective view illustrating the appearance of a testing plate. FIG. 2 is a partial plan view illustrating the shape of a flow path of the testing plate shown in FIG. 1. FIG. 3 is a perspective view illustrating the appearance of a testing plate having a different shape from the testing plate of FIG. 1. FIG. 4 is a partial plan view illustrating the shape of a flow path of the testing plate shown in FIG. 3. FIG. 5 is a partial plan view illustrating the shape of a flow path of a testing plate having a different shape from the testing plate of FIG. 1. FIG. 6 is a partial plan view illustrating the shape of a flow path of a testing plate having a different shape from the testing plate of FIG. 1. FIG. 7 is a schematic diagram showing an embodiment of a fluorescence detecting device of the present invention.

A testing plate 1 shown in FIG. 1 performs a predetermined test where a test sample, such as blood or urine collected from the human body, reacts to a predetermined reagent or the like. When the testing plate 1 is used as, for example, a DNA chip, the collected blood is subjected to a predetermined treatment to be used.

The testing plate 1 has a substantially rectangular-parallelepiped shape which has a predetermined thickness to extend in the longitudinal direction (Y1-Y2 direction in FIG. 1) perpendicular to the width direction (X1-X2 direction in FIG. 2), but it may have shapes other than the substantially rectangular-parallelepiped shape.

The testing plate 1 is constituted by a plate substrate 12 and a lid body 13. The plate substrate 12 and the lid body 13 are made of, for example, glass or resin. The plate substrate 12 and the lid body 13 are made of a material having a predetermined fluorescence intensity. Particularly, when the testing plate 1 is used as a DNA chip or a protein chip, it is preferable that the testing plate 1 be made of a material, such as silica glass, polydimethylsiloxane (PDMS), or polymethyl methacrylate (PMMA), which exhibits low fluorescence of a substantially transparent color, and has high chemical resistance.

When the testing plate 1 is made of resin, it is preferable that the testing plate 1 be formed by injection molding. In some cases, the testing plate 1 is subjected to hot pressing, so that a groove section to be formed on a top surface 12a of the plate substrate 12 of the testing plate 1 is formed to have a high aspect ratio. In addition, when the testing plate 1 is made of glass, it is molded by hot pressing.

On the top surface 12a of the plate substrate 12 shown in FIGS. 1 and 2, one flow path 14 is formed in a concave shape. The Y1 side of the flow path 14 is positioned in the upstream side where liquid, such as a test sample, flows in the flow path 14, and the Y2 side thereof is positioned in the downstream side where liquid, such as a test sample, flows in the flow path 14.

As shown in FIG. 1, an inflow port 15 connected to the flow path 14 is formed in a concave shape in the upstream side (the Y1 side of FIG. 1) of the flow path 14. As shown in FIG. 1, an opening 13a passing through the top surface to the bottom surface of the lid body 13 is provided at a position opposite to the inflow port 15 in the lid body 13. Through the opening 13a, a material, such as a probe or a test sample, can flow into the inflow port 15.

As shown in FIG. 1, an outflow port 16 connected to the flow path 14 is formed in a concave section in the downstream side (the Y2 side of FIG. 1) of the flow path 14. As shown in FIG. 1, an opening 13b passing through the top surface to the bottom surface of the lid body 13 is provided at a position opposite to the outflow port 16 in the lid body 13. A material, such as a test sample or a probe reaching the outflow port 16, can be discharged from the opening 13b.

As shown in FIGS. 1 and 2, the flow path 14 is formed in a zigzag shape to have a predetermined width from the upstream side (the Y1 side) to the downstream side (the Y2 side).

As shown in FIG. 2, first regulation surfaces 20 and second regulation surfaces 21 are alternately arranged from the upstream side (the Y1 side) to the downstream side (the Y2 side) in both side surfaces 14a and 14b of the flow path 14, respectively. The first regulation surfaces 20 are inclined at an angle of θ1 from the X2 direction to the downstream side (the Y2 side) to face each other in the width direction, and the second regulation surfaces 21 are inclined at an angle of θ2 from the X 2 direction to the upstream side (the Y1 side) to face each other in the width direction. In the place where the regulation surfaces 20 and 21 facing in the different direction from each other are connected, the flow direction of a material in the flow path 14 changes.

As shown in FIG. 2, regions 22 and 23 are formed between the regulation surfaces 20 (or 21), facing each other to be directed in the crossed direction with respect to the flow direction inside the flow path 14, so as to regulate the number of test particles 30 to be filled. The test particles 30 having reference numerals A, B, and C (hereinafter, referred to as test particles A, B, and C in some cases) are filled in the region 22, and the test particles 30 having reference numerals C, D, and E (hereinafter, referred to as test particles C, D, and E in some cases) are filled in the region 23, respectively, as an example.

Conventionally, a flow path has been formed in a long straight line, as shown in FIG. 8. As shown in FIG. 2, however, both side surfaces 14a and 14b of the flow path 14 are bent in a plurality of places from the upstream side (the Y1 side of FIG. 2) toward the downstream side (the Y2 side of FIG. 2).

Accordingly, both sides 14a and 14b of the flow path 14 divide the flow path 14 into the plurality of regions 22 and 23 across the upstream side to the downstream side so as to function as the regulation surfaces 20 and 21 which regulate the number of the test particles 30 to be filled inside the regions 22 and 23.

When the regulation surfaces 20 and 21 are formed in such a manner, the following effects can be expected.

In the related art, a plurality of test particles filled in a flow path having a long straight line are continuously tested one by one from the upstream side to the downstream side (or in the reverse direction). Therefore, if the test particles 30 have tolerances, and when the tolerances are accumulated, the positions of the respective test particles 30 can not be accurately grasped, as the testing reaches the final stage. For example, there is a problem in that the tested particles 30 are tested again. In the present invention, however, the flow path 14 is divided into the plurality of regions 22 and 23 by the regulation surfaces 20 and 21, and the number of the test particles 30 to be filled in the regions 22 and 23 can be regulated. Further, a test is performed on each of the regions 22 and 23, so that the accumulated amount of tolerances of the test particles 30 in the respective regions 22 and 23 is small, which makes it possible to test the test particles 30 with high accuracy.

As shown in FIG. 2, three test particles 30 are filled in the regions 22 and 23, respectively. For example, three test particles A, B, and C filled in the region 22 are first tested as targets to be tested. If the respective test particles A, B, and C have tolerances, the test particles are tested in the order of A → B → C, so that the tolerances thereof are accumulated.

However, in the present invention, after the test particle C is tested, a region to be tested changes from the region 22 to the region 23. Therefore, when the test particles filled inside the region 23 are tested, the accumulated amount of tolerances can be easily reset once here. In other words, the accumulated amount of tolerances is completed in each of the regions 22 and 23, so that the accumulated tolerances cannot be imported when the test particles of the next region are tested, which makes it possible to test the respective test particles 30 with high accuracy.

As such, since the accumulated tolerances of the test particles 30 can be reset in each of the regions 22 and 23, the test particles 30 may be formed to have a relatively rough size, compared to the related art. In other words, as the test particles 30 are formed to have rough sizes, the tolerance thereof becomes large. However, the accumulated tolerances can be reset to the number of the test particles 30 filled in each of the regions 22 and 23, so that a reduction in testing accuracy can be properly controlled.

As shown in FIGS. 1 and 2, the flow path 14 is formed in a zigzag shape from the upstream side (the Y1 side of FIGS. 1 and 2) toward the downstream side (the Y2 side of FIGS. 1 and 2). When the test particles 30 are filled into the flow path 14 from the inflow port 15, the test particles 30 can be continuously inserted without any interference (for example, the filling of the test particles 30 is stopped on the way of the flow path 14, or the test particles 30 cannot be filled evenly across the upstream side to the downstream side of the flow path 4).

However, in order that the test particles can be continuously inserted from the inflow port 15, inclination angles θ1 and θ2 of the first and second regulation surfaces 20 and 21 with respect to the X2 direction play an important roll. For example, if any one of the inclination angles θ1 and θ2 is more than 90°, there exists a place where the flow direction inside the flow path 14 from the upstream side toward the downstream side faces in the direction parallel to the X1-X2 direction, or where the particles flow reversely from the downstream side (the Y2 side of FIGS. 1 and 2) to the upstream side (the Y1 side of FIGS. 1 and 2). In this case, it is hard for the test particles 30 to smoothly flow toward the downstream side in such a place, which results in hindering continuous insertion of the test particles 30. Moreover, in the embodiment shown in FIG. 2, the inclination angles θ1 and θ2 are all 45°.

As shown in the embodiment of FIG. 2, the filled region of the test particles 30 is divided into a plurality of regions by the regulation surfaces 20 and 21 facing in different directions from each other. In this case, even when the testing plate 1 is inclined obliquely or waved to stimulate the reaction between the test particles 30 and a test sample DNA, the positions of the test particles 30 hardly deviate inside the flow path 14.

For example, after the plate 1 is inclined so that the downstream side (the Y2 side of FIGS. 1 and 2) is lifted more upward than the upstream side (the Y1 side of FIGS. 1 and 2), the plate 1 is inclined so that the upstream side (the Y1 side of FIGS. 1 and 2) is lifted more upward than the downstream side (the Y2 side of FIGS. 1 and 2). When such an action is repeated, the test particles 30 filled inside the flow path 14 are prevented from moving by the regulation surfaces 20 and 21 facing in different directions from each other. Therefore, the respective test particles 30 hardly move from the positions where they are filled. Even though the above-mentioned action is repeated to improve the mixing effect between the test particles 30 and the test sample DNA, the sequence where the test particles 30 are filled hardly changes. As a result, the test particles 30 can be tested with high accuracy.

Moreover, it is preferable that all the regulation surfaces 20 and 21 be surfaces extending in a straight line. Accordingly, two regulation surfaces 20 and 21 are formed in a straight line to intersect at a predetermined angle θ3 in the place where the flow path 14 is bent, so that the filled positions of the test particles 30 are easily determined. In addition, if the angle θ3 to be defined by the regulation surfaces 20 and 21 is very large, the change of flow inside the flow path 14 is too limited. If the testing plate 1 is waved to stimulate mixing, it is highly likely that the test particles 30 move so that their filled positions change.

A flow path 14 formed in the example testing plate 1 shown in FIGS. 3 and 4, which does not constitute an embodiment of the invention, has a different shape from the flow path 14 shown in FIGS. 1 and 2. In FIGS. 3 and 4, projecting sections 50 alternately protrude inward inside the flow path 14 from side surfaces 14a and 14b of the flow path 14 formed in a concave shape across the upstream side (the Y1 side of FIG. 4) to the downstream side (the Y2 side of FIG. 4).

In the example shown in FIGS. 3 and 4, the projecting sections 50 having a predetermined width T6 are provided to project in the direction parallel to the X1-X2 direction from both the side surfaces 14a and 14b of the flow path 14, with respect to the flow path 14 extending in the direction parallel to the Y1-Y2 direction.

As shown in FIG. 4, in the side surfaces 14a and 14b of the flow path 14, the regions between the projecting sections 50 function as regions 60 and 61 for regulating the number of the test particles 30 to be filled. In the example shown in FIG. 4, five test particles 30 are filled in a row in the respective regions 60 and 61.

In the example shown in FIGS. 3 and 4, for example, five test particles 30 filled inside the region 60 are first tested as targets to be tested, similar to the embodiment shown in FIG. 2. When the respective test particles 30 have tolerances, they are sequentially tested, so that the tolerances are accumulated. However, in the present invention, if the test particles 30 inside the region 60 are completely tested, a target region to be tested can be changed from the region 60 to the region 61. When the test particles filled inside the region 61 are tested, the accumulated amount of tolerances can be easily reset once here. In other words, the accumulation of tolerances is completed in each of the regions 60 and 61, so that the accumulated tolerances are not imported when the test particles of the next region are tested, which makes it possible to test the test particles 30 with high accuracy.

Similar to the embodiment shown in FIG. 2, in the example of FIGS. 3 and 4, the testing accuracy can be prevented from being reduced even though the test particles 30 are formed to have a relatively rough size. In addition, although the testing plate 1 is inclined obliquely or waved to improve the mixing effect between the test particles 30 and the test sample DNA, the test particles 30 filled inside the flow path 14 hardly move due to the projecting sections 50 so as to be firmly positioned inside the respective regions. Therefore, the positions and the sequence of the test particles 30 can be properly suppressed from being changed, which makes it possible to perform a test with high accuracy.

In FIG. 4, the rectangular projecting sections 50 are formed to project inward from both side surfaces 14a and 14b of the flow path 14. As shown in FIG. 5, however, the projecting sections 50 may be constituted by an assembly of a plurality of projections 70 having a cylindrical shape which extend upward from the bottom surface of the flow path 14 to be spaced at predetermined intervals T1. The interval T1 between the respective projections 70 needs to be smaller than a diameter T2 of the test particle 30.

In the example of FIGS. 3 and 4, the projecting sections 50 are formed to project inward from the side surfaces 14a and 14b of the flow path 14, respectively. However, an interval which is smaller than the diameter T2 of the test particles 30 may be formed between the projecting section 50 and the side surface 14a. In other words, the projecting section 50 may be formed near each of the side surfaces 14a and 14b.

FIG. 6 is a partial plan view showing a flow path, according to an example that does not constitute an embodiment of the invention, having a different shape from those of FIGS. 1 to 5. In FIG. 6, a plurality of storage portions (regions) 84 each surrounded by four regulation surfaces 80, 81, 82, and 83 are provided to store the test particles 30. The respective storage portions 84 are connected to each other through a connection path 85.

In FIG. 6, a largest width T3 of the storage portion 84 is greater than a width T4 of the connection path 85, and a largest width T5 of the test particle 30 to be stored inside the storage portion 84 is greater than the width T4 of the connection path 85.

For this reason, the test particles 30 are properly stored in the storage portions 84, and the test particles 30 can be prevented from flowing inside the connection path 85 by the regulation surfaces 80 to 83.

In the example shown in FIG. 6, although one test particle 30 is stored in each of the storage portions 84, the size and shape of the storage portion 84 may be modified so that a plurality of test particles 30 can be stored in the respective storage portions 84.

In the example shown in FIG. 6, after the test particle 30 filled inside a certain storage portion (region) 84 is tested as a target to be tested, the accumulated tolerance of the test articles 30 filled inside the region 84 is reset once, so that the test particles 30 filled inside the next storage portion 84 can be tested. Therefore, the respective test particles 30 can be tested with high accuracy.

Hereinafter, a test method according to the present invention will be described, based on the testing plate 1 shown in FIGS. 1 and 2.

In the testing plate 1 shown in FIG. 1, the flow path 14 is a region where it is determined whether a test sample and probes react to each other while the test sample flows. The inflow port 15 is a region where a test sample and probes are injected, and the outflow port 16 functions as a region where a test sample is discharged.

The plurality of test particles 30 are continuously injected through the opening 13a shown in FIG. 1 to flow from the inflow port 15 toward the flow path 14. The test particles 30 having spherical shapes are made of, for example, glass or resin.

The test particle 30 is provided with a probe which is attached thereon to capture a specific test sample. The probe which captures a specific test sample is a DNA fragment having a complementary sequence, for example, when the test sample is DNA or RNA. Further, the probe is an antibody to be specifically adsorbed when the test sample is protein. Alternatively, by using the theory of chromatography, test particles can be formed to detect ionic molecules or sugar chain.

The test particles 30 contain or are coated with fluorescent dyes.

As shown in FIG. 2, the test particles 30 are filled inside each of the regions 22 and 23 divided by the regulation surfaces 20 and 21. Then, a test sample, such as DNA collected from the human body, flows from the inflow port 15 toward the flow path 14 through the opening 13a shown in FIG. 1. If the test sample includes DNA having a complementary base sequence to the probe, the DNA is hybridized with the probe to be captured.

For example, the probes can be identified by the fluorescent dyes having different wavelengths from the fluorescent dye added to the test sample. By detecting which probe is hybridized with the sample DNA, the base sequence of the DNA included in the test sample can be specified.

The fluorescent intensity can be measured by, for example, a small-sized CCD camera (detecting unit) 28 shown in FIG. 7. It can be diagnosed by the fluorescent intensity whether a specific disease (for example, cancer) occurs in the patient or not.

A fluorescence detecting device shown in FIG. 7 radiates laser beams to the test particles 30 arranged inside the flow path 14 of the testing plate 1.

A laser beam 24 emitted from a laser source 34 is radiated onto the test particles 30 on the plate substrate 12 through a mirror 25 and a lens 26, so that the fluorescent dye in the test particle 30 or the fluorescent dye for labeling a test sample is excited. The fluorescent dye for labeling a test sample is bonded to the test sample which is hybridized with the probe.

Fluorescent light R having a wavelength unique to a fluorescent dye is emitted from the excited fluorescent dye so as to be detected by the CCD camera 28 through the lens 26, the mirror 25, and a filter 27. The mirror 25 and the lens 26 are fixed to a moving plate (moving unit) 29. The moving plate 29 moves in the horizontal direction at the same speed as a cam 35 and a delivering member 31 rotate. As the moving plate 29, the mirror 25, and the lens 26 move in the horizontal direction, the laser beam 24 is sequentially scanned to the test particles 30 arranged inside the flow path 14. Moreover, in the present embodiment, the mirror 25 and the lens 26 of the testing unit are moved in the direction parallel to the flow path 14 by the moving plate 29. However, the testing plate 1 may be moved in the direction parallel to the flow path 14.

In the fluorescence detecting device of the present invention, a control unit 32 for setting a reference position at the beginning of testing is connected to the CCD camera 28. For example, the control unit 32 detects coordinates (X3, Y3) of the first regulation surface 20 shown in FIG. 2 so as to determine the position as the reference position at the beginning of testing.

The detection of the reference position at the beginning of testing is performed by detecting a difference in the fluorescent wavelengths. In addition, a calculating unit 33 is connected to the control unit 32 to calculate the amount of movement on the basis of a length L of each of the regions 22 and 23 and the average diameter of the filled test particles 30.

When the test sample DNA captured by the probe is detected by the fluorescent reaction, it is necessary to know which probe is bonded to the test sample DNA. For example, by labeling the test particles with a fluorescent dye (having different wavelengths from the fluorescent dye for labeling the test sample DNA), the test particles 30 can be identified, so that the kind of probe fixed to the test particle 30 can be identified. Accordingly, if it is known which test particle 30 among the test particles 30 arranged inside the flow path 14 captures the detected test sample DNA, a certain probe to which the test sample DNA has complementary sequences is known.

For this reason, when the laser beam 24 is sequentially scanned to the test particles 30, it always needs to grasp which test particle 30 is scanned.

However, the deviation between the estimated position and the actual position of the test particle 30, which is caused by a variation in the diameter of the test particles 30, more easily occurs as the distance from the reference position at the beginning of testing becomes large. In the present invention, however, the fluorescent intensities of the test particles A, B, and C filled inside the region 22 shown in FIG. 2 are measured. Then, the reference position at the beginning of testing can be changed before the test particles 30 filled in the next region 23 are tested.

By the calculating unit 33 shown in FIG. 7, the moving amount of the moving plate 29 is determined to a predetermined amount. At the present moment, the moving plate 29 moves by the moving amount inside the region 22 from the reference position (X3, Y3) at the beginning of testing, so that the fluorescent intensities of the respective test particles 30 filled inside the region 22 are tested.

The calculating unit 33 can calculate how many test particles 30 are filled inside the region 22. However, the test particles A, B, and C are completely tested in the order of A → B → C. Then, in order to grasp whether there are actually any other test particles 30 inside the region 22, the moving plate 29 is moved to coordinates (X4, Y4) corresponding to the end of the region 22 to measure the fluorescent intensity. If there are no test particles 30, the fluorescence detecting device measures the fluorescent intensity emitted from the testing plate 1. Therefore, at the time when the fluorescent intensity of the testing plate 1 is measured, the fluorescence detecting device determines that the test particles 30 filled inside the region 22 have been completely tested.

Next, the control unit 32 detects coordinates (X5, Y5) of the second regulation surface 21, which is shown in FIG. 2, corresponding to a leading end of the region 23, to determine the position as the next new beginning reference position of testing.

Herein, the moving plate 29 and the laser beam 24 move by a predetermined moving amount from the coordinates (X5, Y5) of the second regulation surface 21 to coordinates (X7, Y7) of the second regulation surface. At this time, however, since the testing of the test particle C has been already completed, the moving plate 29 is moved to coordinates (X7, Y7), and then the test is performed, without performing testing only one time.

Alternatively, the beginning reference position is determined to be coordinates (X6, Y6), which is the border between the test particle C and the test particle D. Then, the test may start.

Various test techniques are considered, but the present invention has a specific feature in which the beginning reference position can be changed whenever the testing regions 22 and 23 are changed. Preferably, the beginning reference position can be easily changed on the basis of the coordinates of the regulation surfaces 20 and 21.

When the test particles 30 filled inside the long flow path 14 according to the related art are continuously tested, the beginning reference position cannot be actually changed, because there is no reference required for changing the beginning reference position. Therefore, as the testing reaches the final stage, the accumulated amount of tolerances of the test particles 30 becomes larger, so that aberration easily occurs in the test.

In the present invention, however, the beginning reference position can be easily changed in each of the regions 22 and 23. Therefore, the accumulated tolerances of the test particles 30 can be reset whenever the testing region is changed, which makes it possible to test the test particles 30 with high accuracy.

As described above, according to the present invention, the flow path is divided into a plurality of regions by regulation sections, and the test particles filled inside each of the regions can be tested in each of the regions. Therefore, even though the test particle has a tolerance, the accumulated tolerances in the respective regions are small, which makes it possible to perform a test with high accuracy.

## Claims

1. A test method using a plate (1) and a number of test particles,
the plate including:
a flow path (14) comprising regulation sections that divide the flow path into a plurality of regions extending from an upstream side to a downstream side wherein the regulation sections are both side surfaces (14a, 14b) of the flow path, and both side surfaces are bent in one or more places from the upstream side to the downstream side, the side surfaces of the flow path being composed of first regulation surfaces (20) facing each other in the width direction and second regulation surfaces (21) which are inclined in an orthogonal direction from the first regulation surface to face each other in the width direction, and
the first regulation surfaces and the second regulation surfaces are alternately disposed from the upstream side to the downstream side in the respective side surfaces, such that the flow path has a zigzag shape and the number of test particles filled inside each region is regulated,
the test method comprising:
filling the flow path with the test particles; setting a predetermined position of one of the regulation sections as a test beginning reference position; and
testing the test particles filled in each of the regions from the test beginning reference position,
wherein the test beginning reference position is changed to a predetermined position of a different regulation section whenever the test region is changed to a corresponding different region.

## Patentansprüche

1. Eine Testmethode unter Verwendung einer Platte (1) und einer Reihe von Testpartikeln,
wobei die Platte Folgendes beinhaltet:
einen Strömungsweg (14), der Steuerungsabschnitte umfasst, die den Strömungsweg in eine Vielfalt von Regionen aufteilt, die sich von einer vorgeschalteten Seite zu einer nachgeschalteten Seite erstrecken, wobei die Steuerungsabschnitte beide Seitenflächen (14a, 14b) des Strömungsweges sind, und beide Seitenflächen an einer oder mehreren Stellen von der vorgeschalteten Seite zur nachgeschalteten Seite gebogen sind, und die beiden Seitenflächen des Strömungsweges aus ersten Steuerungsflächen (20), die sich in Breitenrichtung gegenüber stehen, und zweiten Steuerungsflächen (21), die in orthogonaler Richtung von der ersten Steuerungsfläche geneigt sind, um sich in der Breitenrichtung gegenüberzustehen, zusammengesetzt sind, und
die erste Steuerungsfläche und die zweite Steuerungsfläche sind alternierend von der vorgeschalteten Seite zur nachgeschalteten Seite in den entsprechenden Seitenflächen angeordnet, sodass der Strömungsweg eine Zickzack-Form hat und die Anzahl der in jede Region eingefüllten Testpartikel reguliert ist,
wobei die Testmethode Folgendes umfasst:
Füllen des Strömungsweges mit den Testpartikeln;
Einstellen einer vorbestimmten Position von einem der Steuerungsabschnitte als eine Referenzposition zu Beginn des Tests; und
Prüfen der Testpartikel, die in jede der Regionen von der Referenzposition zu Beginn des Tests gefüllt wurden,
wobei die Referenzposition zu Beginn des Tests zu einer vorbestimmten Position eines anderen Steuerungsabschnitts geändert wird, immer wenn die Testregion in eine korrespondierende andere Region geändert wird.

## Revendications

1. Méthode de test utilisant une plaque (1) et un certain nombre de particules de test, la plaque comprenant :
une trajectoire d'écoulement (14) comprenant des sections de régulation qui divisent la trajectoire d'écoulement en une pluralité de régions s'étendant depuis un côté en amont à un côté en aval, dans laquelle les sections de régulation sont des surfaces des deux côtés (14a, 14b) de la trajectoire d'écoulement, et les surfaces des deux côtés sont courbées en un ou plusieurs emplacements depuis le côté en amont au côté en aval, les surfaces latérales de la trajectoire d'écoulement étant composées de premières surfaces de régulation (20) opposées l'une à l'autre dans la direction de la largeur et de deuxièmes surfaces de régulation (21) qui sont inclinées dans une direction orthogonale depuis la première surface de régulation de manière à être opposées l'une à l'autre dans la direction de la largeur, et
les premières surfaces de régulation et les deuxièmes surfaces de régulation sont placées en alternance depuis le côté en amont au côté en aval dans les surfaces latérales respectives, de manière à ce que la trajectoire d'écoulement ait la forme d'un zigzag et le nombre de particules de test remplies à l'intérieur de chaque région soit régulé,
la méthode de test comprenant :
le remplissage de la trajectoire de test avec les particules de test ;
le paramétrage d'une position prédéterminée de l'une des sections de régulation à titre de position de référence du démarrage du test ; et
le test des particules de test remplies dans chacune des régions depuis la position de référence du démarrage du test ,
dans laquelle la position de référence du démarrage du test est changée en une position prédéterminée d'une section de régulation différente chaque fois que la région de test est changée en une région correspondante différente.
